Europäisches Patentamt

European Patent Office

Office européen des brevets

(11) Publication number: **0 032 771**
**B1**

# EUROPEAN PATENT SPECIFICATION

(45) Date of publication of patent specification: **16.04.86**

(21) Application number: **81200054.5**

(22) Date of filing: **19.01.81**

(51) Int. Cl.⁴: **G 11 B 17/02, G 11 B 23/02**

(54) **Information recording and/or reading system.**

(30) Priority: **22.01.80 NL 8000381**

(43) Date of publication of application:
**29.07.81 Bulletin 81/30**

(45) Publication of the grant of the patent:
**16.04.86 Bulletin 86/16**

(84) Designated Contracting States:
**AT DE FR GB IT NL**

(56) References cited:
**DE-A-1 500 833**
**DE-A-2 360 324**
**GB-A-2 031 215**
**US-A-3 968 972**
**US-A-4 125 883**
**US-A-4 151 572**

(73) Proprietor: **N.V. Philips' Gloeilampenfabrieken**
**Groenewoudseweg 1**
**NL-5621 BA Eindhoven (NL)**

(72) Inventor: **Dona, Marinus Josephus Jakobus**
**c/o INTERN. OCTROOIBUREAU B.V. Prof.**
**Holstlaan 6**
**NL-5656 AA Eindhoven (NL)**
Inventor: **Franken, Adrianus Jacobus Jozef**
**c/o INTERN. OCTROOIBUREAU B.V. Prof.**
**Holstlaan 6**
**NL-5656 AA Eindhoven (NL)**
Inventor: **van der Giessen, Pieter**
**c/o INTERN. OCTROOIBUREAU B.V. Prof.**
**Holstlaan 6**
**NL-5656 AA Eindhoven (NL)**

(74) Representative: **Van Weele, Paul Johannes Frits**
**et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an information recording and/or reading system comprising:

A. an interchangeable disc unit comprising

— a disc pack comprising at least one information disc,
— an enclosure for the disc pack, comprising a first cover and a second cover, which engage with each other and are movable relative to each other and relative to the disc pack from a closed position in which the covers together constitute a substantially closed enclosure within which the disc pack is retained, at least one of the covers having a central opening for the passage of means for the rotary drive of the disc pack about an axis of rotation when the covers have been moved from the closed position into an operating position, the enclosure of the disc unit, viewed in a direction perpendicular to the plane of the information disc, having a substantially polygonal shape, as well as
— connecting means which, at least in the closed position, interconnect the two covers and which comprise first connecting means attached to the first cover and second connecting means attached to the second cover, the said connecting means comprising a plurality of separate connecting devices which are each disposed near a respective corner of the enclosure, between that corner and the circumference of the disc pack, and

B. a drive unit comprising

— a drive device which is rotatable about an axis of rotation for the rotary drive of a disc pack, which device comprises a drive spindle provided with centring means and supporting means for centring and supporting the disc pack on the drive spindle,
— an information recording and/or reading apparatus for recording and/or reading information on or from a disc pack placed on the drive device, which apparatus comprises at least one recording and/or reading head which is radially movable relative to the axis of rotation of the drive device,
— a cover-displacing device for moving the two covers of a disc unit placed on the drive unit relative to each other between the closed position and the operating position, in a direction at least substantially parallel to the axis of rotation of the drive device, which cover-displacing device comprises means for retaining the covers in the operating position during operation, as well as
— a release device comprising a release element which is movable relative to the disc unit and which cooperates with the connecting means from the outside of the enclosure for interrupting their connecting positions.

United States Patent Specification 4,151,572 describes a system of the type defined in the opening paragraph. With a disc unit of a substantially square shape in a view at the covers. The connecting means of the disc unit of the known system comprise eight identical levers with associated compression springs. Near each of its four corners each cover is provided with a bearing pin for a lever, which pin extends perpendicularly to the cover, so that said lever is pivotable to a limited extent in a direction parallel to the covers. The levers are arranged pole-symmetrically relative to the centre of the enclosure and identically for both covers; the bearing pins are located at a small offset from the diagonals of the cover. The levers each comprise a free end with an oblique face. On fitting the covers on each other, the oblique surfaces at the free ends of the levers on the first cover cooperate with those of the levers on the second cover, so that the levers, against spring pressure, are pivoted out and are subsequently pivoted back. In the pivoted-back positions the levers on the one cover hook behind the levers on the other cover at their free ends, so that the covers are interconnected. For releasing the covers they are formed with openings near the corners, enabling release pins of a drive device to be introduced in an axial direction. The release pins slightly pivot the four levers on the cover through which the release pins extend against spring pressure, so that the free ends of the levers no longer cooperate with each other. After this the covers can be moved relative to each other to the operating position.

The connecting means of the known disc unit comprise a comparatively great number of separate parts, namely eight levers and eight compression springs as well as eight retainers for the levers on the bearing pins. The levers should be journalled in a suitable manner, that is the bearing pins should be robust and the levers should be journalled on said pins with a comparatively small clearance. The known disc unit can be opened in a comparatively easy manner by unauthorized persons. For this purpose it suffices to pivot a lever at every corner through a small angle via the opening in the cover. A small axial displacement of the covers relative to each other is then sufficient to separate the covers from each other at the relevant corner. In many cases this will be possible owing to the elasticity of and the clearance between the covers.

It is the object of the present invention to provide a system of the type mentioned in the opening paragraph with the exchangeable disc unit, whose connecting means comprise a smaller number of parts and which cannot readily be opened by unauthorized persons. To this end the invention is characterized in that

— each connecting device comprises a plurality of pivotable connecting elements which are uniformly arranged on the first cover around a central axis parallel to the axis of rotation of the disc pack, which elements comprise a plurality of fingers which extend away from the first cover,

— the second cover is provided with an annular stop for the fingers, which stop is coaxial with the said central axis and has a central opening defined by a wall with a diameter which decreases in the direction towards the first cover,

— in the connecting position the fingers, at least near their free ends, engage with the said wall,

— within the fingers there is arranged a locking member which is axially movable between a first position and a second position, which locking member in the first position cooperates with the fingers in order to lock said fingers in their connecting positions and which in the second position allows the fingers to pivot to their released positions,

— there are provided resilient means for loading the locking member towards its first position, the fingers being resiliently loaded towards their connecting positions, and that

— the release element of the drive unit comprises an unlocking member for axially moving the locking member from its first position to its second position.

A disc unit according to the invention is set out in claim 5.

It is known from DE—A—2,360,324 to provide a tape cartridge with a connecting device for interconnecting two parts. The connecting device comprises a plurality of resilient fingers on one part and an annular stop for the fingers on the other part.

The connecting device can be opened by a release element in a tape drive unit.

Thus a connecting device is obtained which cannot readily be opened by unauthorized persons and which is moreover extremely capable of being opened, once it is in a drive unit, during a translation of the disc unit in the direction of a drive spindle. It suffices to move the locking member against the spring force with the aid of a release element in the drive device in order to cause the fingers to pivot under the influence of their own elasticity, so that subsequently the two covers can freely be moved apart to the operating position.

The resilient means may comprise a helically wound compression spring which cooperates with a cup-shaped locking member, whose bottom has a smaller diameter than the upper rim, the compression spring pressing on the bottom of the cup-shaped locking member.

In order to prevent an undesired transverse movement of the cup-shaped locking member and, moreover, in order to further complicate opening of the connecting device by unauthorized persons, an embodiment is of interest which is characterized in that the bottom of the cup-shaped latching member has a central opening and the connecting device is provided with a guide member for the locking member, which guide member is connected to the first cover and has a face end which extends through the central opening of the latching member. For moving the locking member, a substantially uniform pressure is necessary on the bottom of the cup-shaped locked member, around the guide member. Thus, an annular tool is required, because local pressure on the annular portion of the bottom of the locking member would tilt the locking member, so that it could no longer be moved to the unlocked position.

The presence of the guide member may furthermore lead to another embodiment, which is characterized in that the guide member has an axial bore which opens out of the free end. A release device of a drive unit may be provided with a locating pin which fits in the axial bore, for locating the disc unit on the drive unit.

In a disc unit in accordance with the invention the first connecting means may comprise a component made of an elastic plastics and secured to the first cover, which component is integral with the pivotable connecting element(s), and the stop on the second cover may be integral with the second cover. In this way an inexpensive and easy-to-manufacture connecting device is obtained, of which the movable connecting element can be manufactured from a material with suitable resilient properties, which is capable of repeatedly being subjected to varying bending stresses. The enclosure itself can be made of a different plastics.

The invention will now be described in more detail with reference to the drawing, in which:

Fig. 1 is a perspective view of a drive unit having about the size of shoe-box and placed on an associated cabinet accommodating the necessary electronics.

Fig. 2 again shows the drive unit of Fig. 1 but now with an opened flap at the front and with a disc unit in accordance with the invention partly inserted into the drive unit.

Fig. 3 is a plan view of the disc unit of Fig. 2.

Fig. 4 is a cross-sectional view of the disc unit of Fig. 3 taken on the line IV—IV in Fig. 3.

Fig. 5 on a slightly enlarged scale, is a cross-sectional view of part of the disc unit of Fig. 3 taken on the line V—V in Fig. 3.

Fig. 6 is a view of a detail of the disc unit of Fig. 3, viewed from the other side.

Fig. 7 is a cross-sectional view part of a disc unit similar to that of Fig. 5, provided with a different connecting device for the covers.

Fig. 8 is a cross-sectional view of a part of the drive unit of Figs. 1 and 2 with the flap opened.

Fig. 9 is a cross-sectional view similar to Fig. 8 but with the flap closed,

Fig. 10 is a side view of a part of the drive unit of Figs. 8 and 9 which serves to support the disc unit of Figs. 3 and 4 in a rest position,

Fig. 11 again shows the parts of Fig. 10 but now in a mutual relationship corresponding to the operating position of a disc unit,

Fig. 12 is a cross-sectional view of the drive unit of Figs. 1 and 2 taken on the axis of rotation of a drive device, the drive unit containing a disc unit in accordance with Figs. 3 and 4 which is still in the closed position,

Fig. 13 is a cross-sectional view of part of the drive unit shown in Fig. 12 but now in a situation in which the connecting devices of the disc unit have been released and the upper cover of the enclosure rests on four release elements,

Fig. 14 is a cross-sectional view similar to Fig. 13 but showing a situation in which the information disc has been centred on a turntable of the drive device, and

Fig. 15 is a cross-sectional view similar to Fig. 12, the covers of the disc unit being in the operating position relative to each other and the information disc being centred and clamped in position on the turntable of the drive device.

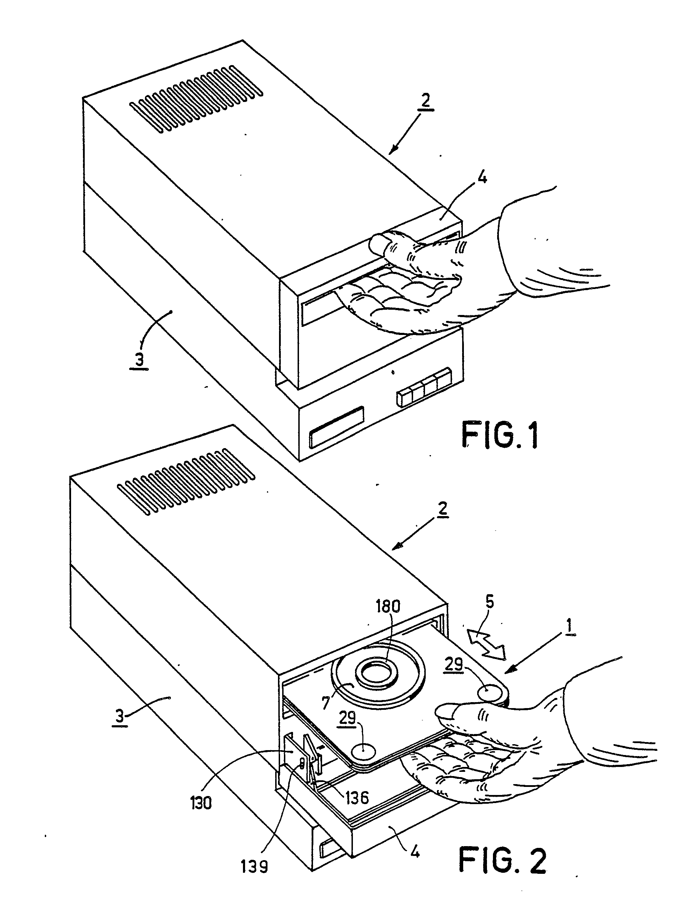

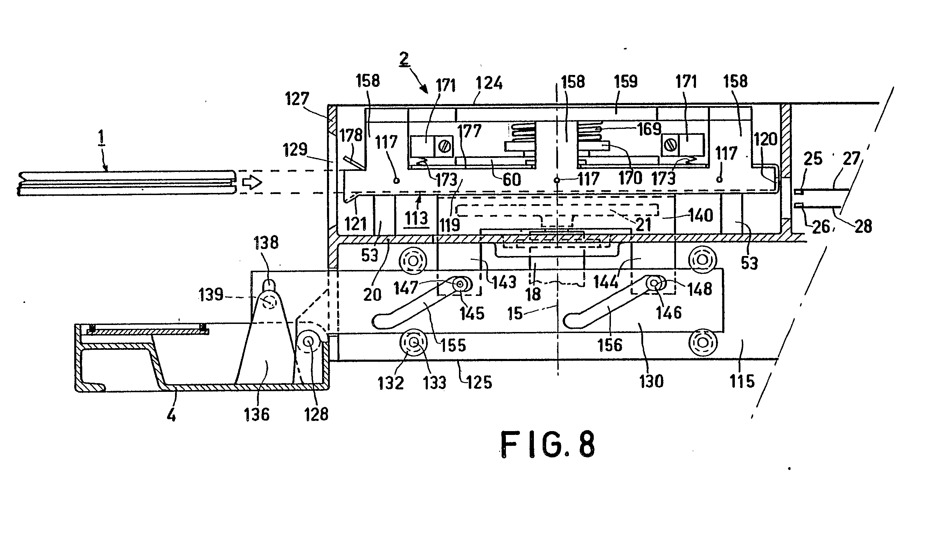

The system shown in Figs. 1 and 2 comprises an interchangeable disc unit *1* and an associated drive unit *2*, with the aid of which data can be recorded or reproduced magnetically. The drive unit *2* measures approximately 40×24×13 cm and cooperates with the disc unit *1* measuring approximately 22×22×1 cm. The drive unit *2* is placed on a cabinet *3*, which has been adapted to the dimensions of the drive unit and which accommodates the electronics required for controlling the transmission of data to and from the disc unit. The combination comprising the drive unit 2 and the cabinet 3 may be utilized as peripheral equipment in conjunction with smaller computers and with similar equipment such as text processors. At the front the drive unit *2* comprises a flap 4 which is pivotable about a lower edge and which is formed with a slot 5 in order to enable the flap to be opened into the position shown in Fig. 2 with the fingers of one hand. When the flap is open the disc unit *1* can be slid manually into and out of the drive unit in the directions of the double-headed arrow 5. On closing the flap the enclosure of the disc unit *1* is opened and the information disc accommodated therein is placed on a drive device of the drive unit 2. This will be described in more detail hereinafter with reference to Figs. 8 to 15. Corresponding parts in the drawing are designated by the same reference numerals.

The interchangeable disc unit *1* comprises a single magnetic information disc 6, which consists of an aluminium substrate having a diameter of approximately 210 mm, which on both sides is provided with a magnetizable layer. The magnetic information disc is smaller than the customary rigid aluminium storage discs employed in peripheral equipment for computers and the like, but apart from this has the same properties. In the centre of the information disc an elastic plastics centring element 7 is mounted, which serves for centring the information disc on the drive device.

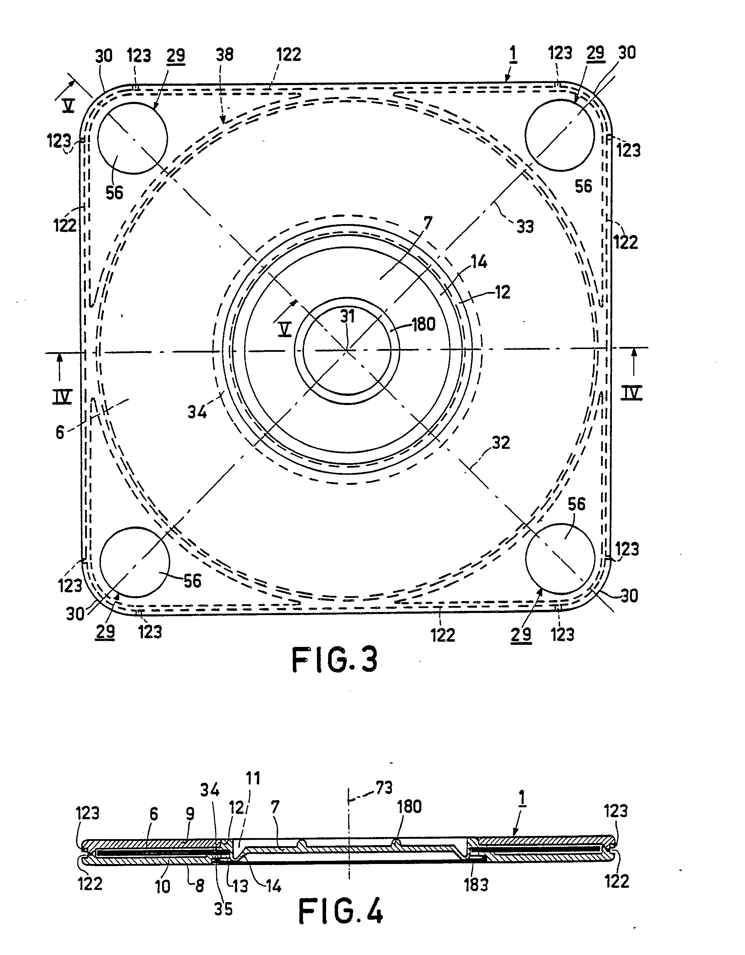

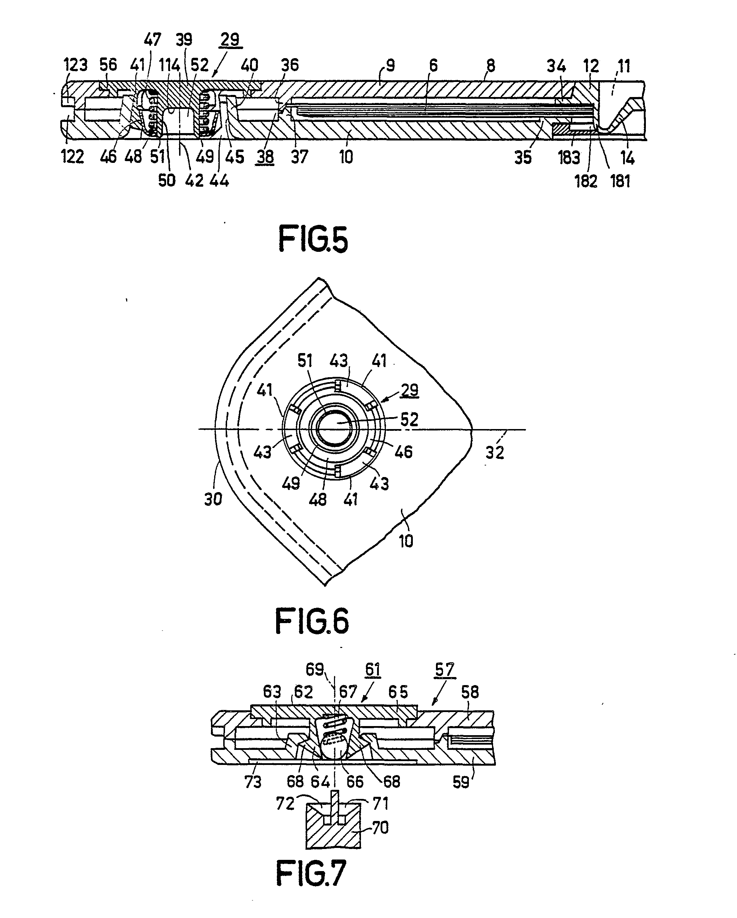

The information disc 6 is accommodated in an enclosure *8*, which comprises a first cover 9 and a second cover 10. Said covers engage with each other and are movable relative to each other from a closed position, see Fig. 4, in which the two covers together constitute a substantially closed enclosure in which the disc pack is retained. The first cover 9 is formed with a central opening 11, which engages with an annular portion 12 of the centring element 7. The second cover 10 has a central opening 13 of greater diameter, through which a corrugation 14 formed in the centring element 7 projects. The opening 13 serves for the passage of a turntable for the rotary drive of the information disc 6 when the covers 9 and 10 have been moved from the closed position to the operating position, as is to be described in more detail hereinafter. In the closed position, see Figs. 4 and 5, the two covers 9 and 10 are interconnected with the aid of first connecting means, attached to the first cover 9, and second connecting means, attached to the second cover 10. These means also will be described in more detail hereinafter.

The drive unit *2*, also see Figs. 8 to 15, comprises a drive device *16*, which is rotatable about an axis of rotation 15, for the rotary drive of the information disc 6. The drive device comprises a drive spindle 17, which is constituted by the motor shaft of a drive motor 18, which is mounted on a deck plate 20 of the drive unit by means of a flange 19. Near a free end a disc 21 is rigidly mounted on the drive spindle 17, which disc constitutes a turntable for the information disc 6. On its upper side the disc 21 has a supporting surface 22 which functions as supporting means for the information disc. This surface is formed with a recess 23, which is defined by an inner wall 24. This inner wall functions as centring means for centring the information disc. For recording and/or reading information on the information disc 6 there are provided two magnetic heads 25 and 26, which are mounted on the ends of two arms 27 and 28 respectively. Said arms are radially movable relative to the axis of rotation 15 of the drive device and belong to a conventional information recording and/or reading apparatus, not shown.

The enclosure of the disc unit viewed in a direction perpendicular to the plane of the information disc (see Fig. 3), has a substantially polygonal, in this embodiment a substantially square, shape. The connecting means for interconnecting the covers 9 and 10 comprise four separate connecting devices *29*, which are each located near a corner 30 of the enclosure, namely between the relevant corner 30 and the circumference of the information disc 6. The four connecting devices *29* are identical and are disposed at equal distances from the centre 31 of the information disc *6*, in the diagonals 32 and 33 of the square.

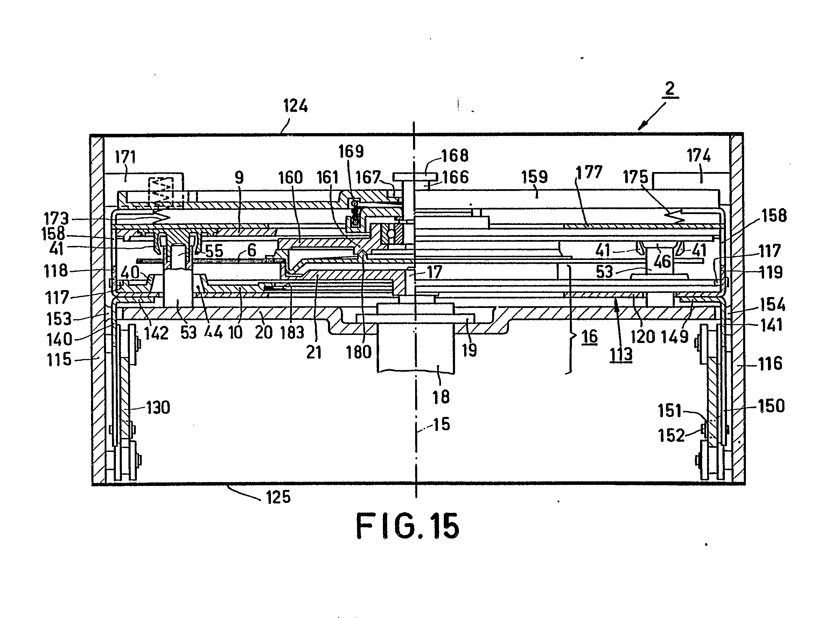

The cover-displacing means comprises means, to be described hereinafter, for moving each of the covers 9 and 10 relative to the information disc 6 and keeping them in the operating position during operation (see Fig. 15 in which the covers 9 and 10 are shown in the operating position). In the operating position the information disc is entirely clear of the two covers 9 and 10 and is rotatable relative to each of the covers 9 and 10 by the drive device 16.

The information disc 6 is clamped in position by the covers 9 and 10. The first cover 9 presses on a flange 34 of the centring element 7, whilst the second cover 10 is locally provided with an annular raised portion 35, which bears directly on a portion of the substrate of the information disc 6, namely on a portion which does not serve for information storage. When the connecting devices 29 have been released the covers have a slightly curved shape with a convex side and a concave side. This is not shown in the drawings. The covers are made of a slightly resilient plastics and in the said released condition they face each other with their convex sides. The connecting devices 29 draw the covers towards each other near the corners 30, the covers being resiliently deflected from the slightly curved shape into a flat shape. The information disc 6 is then resiliently clamped between the two covers. In the closed position of the covers the information disc is moreover locked against radial movement by the annular portion 12 of the centring element 7 engaging with the central opening 11 of the first cover. Apart from the said locations where the information disc 6 is clamped between the covers 9 and 10, said disc is entirely clear of the two covers, so that the part which is available for recording and/or reproducing information will always be entirely free of any contact with the covers, so that no damage can occur.

In order to prevent the penetration of dust into the enclosure the two covers are provided with dust sealing means, which cooperate with each other and which constitute a dust sealing device 38 which concentrically surrounds the information disc 6 near its circumference. The said dust sealing means comprise annular raised portions 36 and 37 of the two covers 9 and 10, which raised portions in the closed position of the covers engaged with each other or at least substantially engage with each other. It is alternatively possible to employ an elastically deformable material, such as a foamed-plastics ring. The connecting devices 29 are each located between a corner 30 of the enclosure and the dust sealing device 38, so that any dust which may have penetrated via the connecting devices 29 cannot automatically reach the information disc 6.

To prevent penetration of dust near the central opening 11 the covers rests on the flange 34 and only a slight clearance exists between the cover and the annular portion 12 of the centring element 7. The centring element has a rim 181 which extends in the direction of the cover 10 and which has an outer wall 182, both belonging to the corrugation 14. In the annular raised portion 35 an annular elastic member 183 is glued, which member locally seals the central opening 11 and engages the outer wall 182 in a dust-tight manner but is not attached to the wall. This member does not impair the cooperation of the information disc 6 with the drive device 16. This is because the central opening 11 is so large that the turntable can pass through the opening; the member 183 is then elastically deformed, but does not prevent the passage of the turntable.

Each of the connecting devices 29 can be released and comprises first connecting means 39 of the first cover 9 and second connecting means 40 on the second cover 10, which second means cooperate with said first means and are movable relative thereto. All four connecting devices can be released with the aid of a release device on the drive unit, to be discussed hereinafter.

The disc unit 1 shown is, as stated previously, provided with four identical connecting devices 29. In principle, it would also be possible to employ connecting devices of different types at the varoius corners. However, in the present system the shape of the disc unit is such that the disc unit can be inserted into the drive unit 2 regardless of which side is at the front. In the connecting devices 29 which are used in the first embodiment the first connecting means 39 comprise three connecting elements which are connected to the first cover so as to be pivotable between a connecting position and a released position, which elements comprise fingers 41 which extend away from the first cover 9 and which are uniformly arranged around a central axis 42. Each of the fingers 41 has a free end 43 which is remote from the cover 9. The second connecting means on the second cover 10 comprises a stop 40 which, in the closed position of the enclosure, cooperates with the three fingers 41 near the free ends 43 and in this position prevents the covers 9 and 10 from being moved relative to each other.

In Fig. 5 the fingers 41 are in a connecting position, Fig. 15 showing the fingers 41 in a released position in which they have been pivoted to a position nearer the axis 42. The stop 40 on the cover 10 for the fingers 41 is annular and consists of a ring which is integral with the cover 10 and which is concentric with the axis 42. The annular stop 40 has a central opening 44 which is defined by an inner wall 45 having a diameter which decreases in the direction of the first cover 9. In the connecting position shown in Fig. 5 the fingers 41 are urged against the inner wall 45 of the annular stop 40 near their free ends 43 under the influence of a resilient load which is directed away from the central axis 42.

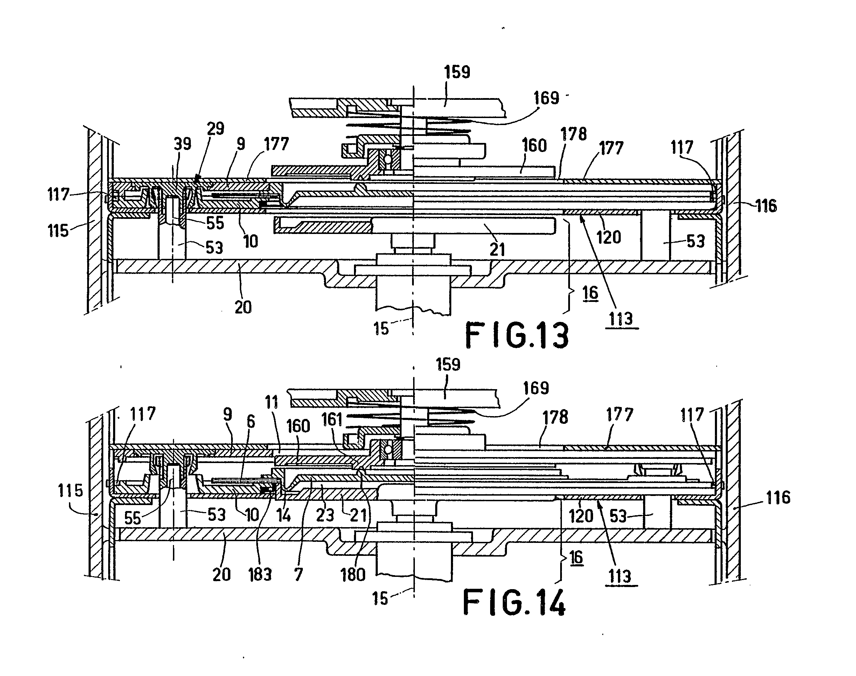

Within the three fingers there is disposed a locking member 46 which is axially movable in the direction of the central axis between a locked position (shown in Fig. 5) and an unlocked position (shown in Figs. 13 to 15). In the locked position said locking member cooperates with the fingers 41 and locks said fingers in their connecting positions. In the unlocked position it leaves the fingers free to pivot in a direction towards the central axis 42, towards a released position. The locking member 46 is resiliently loaded towards its locked position by means of a helical compression spring 47. The member 46 then urges the fingers 41 towards their connecting positions by pressing them against the inner wall 45 of the annular stop 40. The locking member 46 is made of a thin metal, for example brass or aluminium and has substantially the form of a cup with a bottom 48 having a smaller diameter than the upper rim. The compression spring 47 presses on the bottom 48 of the locking member 46. In the bottom 48 a central opening 49 is formed and the first connecting means 39 on the first cover 9 have a cylindrical guide member 50 for the locking member 46, which guide member has a free end 51 which extends through the central opening 49 of the locking member. In the free end 51 an axial bore 52 is formed.

In order to release the four connecting devices 29, the drive unit 2 is provided with a release device. This device comprises four release elements 53 which are stationarily mounted on the deck plate 20. As is to be described in more detail, the displacement device of the drive unit 2 moves the disc unit 1 relative to the stationary release elements 53. The release elements serve to pivot the pivotable fingers 41, from outside the enclosure, from the connecting position (shown in Fig. 5) to the released position (shown in Figs. 13 to 15), the openings 44 in the annular stops 40 allowing both the release elements 53 and the pivotable fingers 41 to pass through when the covers 9 und 10 are moved to their operating position.

In order to release the connecting devices 29, the release elements 53 of the drive unit cooperate with the locking members 46 of the connecting devices, namely by means of unlocking members 54, which move the locking members from the locked position to the unlocked position. Each unlocking member comprises an annular portion at the top of a release element 53. The release elements 53 are also formed with locating pins 55 which fit into the axial bores 52 of the connecting devices 29, for locating the disc unit on the drive unit.

The first connecting means 39 comprise a component made of an elastic plastics and mounted on the first cover 9. It comprises as an integral unit the pivotable fingers 41 as well as the guide member 50 and a disc-shaped portion 56. The portion 56 is mounted in the cover 9 in a suitable manner, for example by glueing. A suitable plastics is, for example, polyamide. The annular stop 40 of the second cover 10 is integral with the second cover.

Fig. 7 shows that it is also possible to employ different connecting devices. A disc unit 57 comprises a first cover 58 and a second cover 59, which constitute an enclosure for an information disc 60. The connecting device 61 comprises first connecting means 62 connected to the first cover 58 and second connecting means 63 in the form of an annular stop which is integral with the second cover 59. Also in this case the first connecting means constitute an integral unit and comprise four fingers 64 which are connected to a disc 65, which is glued to the first cover 58. In this embodiment the locking member comprises a ball 66, which is loaded by a compression spring 67. Each of the fingers 64 has a hook-shaped portion 68, which in the closed position of the enclosure cooperates with the upper rim of the annular stop 63. The compression spring 67 may be proportioned so that the pressure exerted on the ball 66 is sufficient to move the fingers towards a connecting position. It is alternatively possible to provide the first connecting means 62 with fingers which are pre-loaded by their own elasticity. In order to be moved to their released positions the fingers then have to be moved against their own elastic pre-loading. The release element 70 of the associated release device is provided with an unlocking member cooperating with the locking member 66, which unlocking member takes the form of a pin 71. In the free end of the release element 70 a conical recess 72 is formed around said pin, which recess cooperates with the fingers 64 and pivots said fingers to their released positions.

The disc 65 of the connecting device 61 of Fig. 7 has an upper surface which slightly projects above the upper surface of the first cover 58. The lower cover 59 has a corresponding recess 73. Thus a number of disc units 57 may be stacked without sliding off each other.

Without departing from the principle of the invention the connecting devices shown in Figs. 5 to 7 may be modified in different ways. Thus, instead of four connecting elements 64 it is also possible to provide a greater or smaller number of such elements. Another embodiment which is conceivable does not only have an annular stop 63 but, disposed above it, a second annular stop for the fingers 64, so that the covers 58 and 59 can only move relative to each other over the distance between said two stops, which distance could be sufficient to allow the information disc to rotate inside the enclosure. The disc unit in such an embodiment could not be adapted to cooperate with magnetic heads which are passed over the discs from the side.

The drive unit 2, as well as the cooperation of the drive unit with the disc unit 1, will now be discussed in more detail.

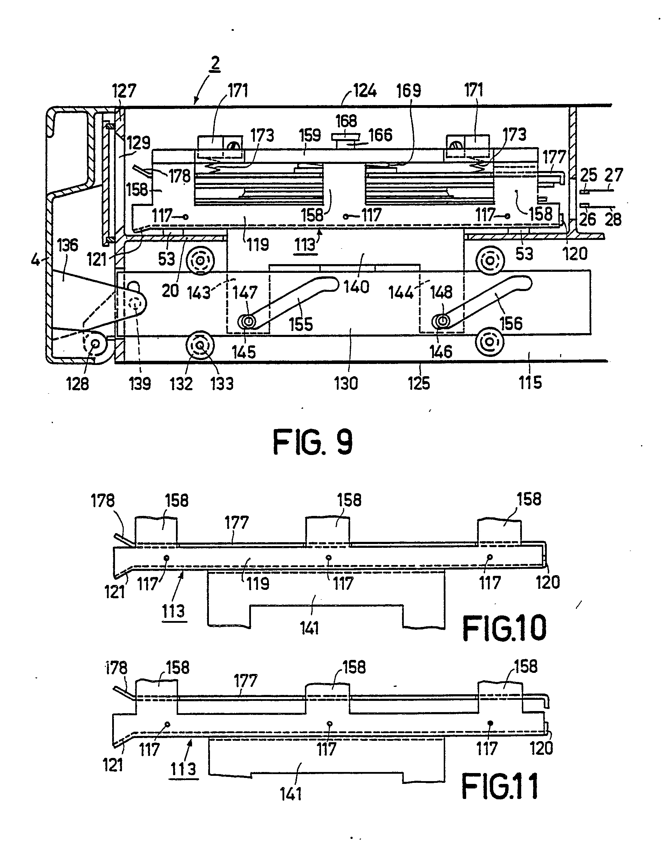

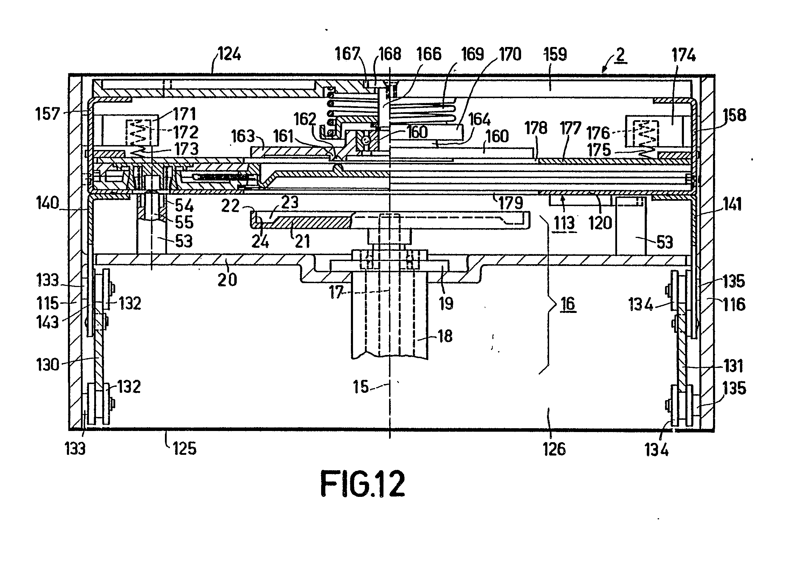

The cover-displacing means of the drive unit comprise a supporting frame 113, which is movable between a rest position, see Fig. 8 and Fig. 12, and an operating position, see Fig. 9, Fig. 11 and Fig. 15. In the rest position the supporting frame 113 serves for supporting a closed disc unit 1 at some distance from the drive device 16. In this position a disc unit can be inserted into or removed from the drive unit through the opened flap 4, without being impeded by the drive device 16. The supporting frame is movable between its rest position and its operating position in a direction substantially parallel to the axis of rotation 15 of the drive device 16. As the supporting frame is moved from its rest position to its operating position the connecting devices 29 of the disc unit are moved onto the release device of the drive unit. As stated previously, the release device comprises four release elements 53 mounted on the deck plate 20. The connecting devices of the disc unit are moved onto the release elements 53 and made to cooperate therewith, so that the connecting devices are released in the manner described in the foregoing. In the situation shown in Fig. 13, in which the supporting frame 113 is in a position intermediate between the rest position and the operating position, the connecting devices 29 have already been released. As the supporting frame moves beyond this intermediate position, the first cover 9 of the disc unit can no longer move with it, because the locating pins 55 contact the bottom 114 of the bores 52 in the cylindrical guide members 50 of the connecting devices 29. The first cover is thus supported in its operating position by the release elements 53. Thus, the release elements 53 function as first stops, which cooperate with the first cover of the disc unit, for retaining the first cover in the operating position. Alternatively, stops could be used which are rigidly connected to the side walls 115 and 116 of the drive unit. For retaining the second cover 10 in its operating position, as well as for moving the second cover to its operating position, there are provided second retaining means wihch are movable relative to the release elements 53, which means comprise a number of second stops 117 which cooperate with the second cover 10. In the present embodiment of the drive unit said stops are arranged on the supporting frame 113. They comprise a number of pins 117 in the upright sides 118 and 119 of the supporting frame 113. The supporting frame 113 furthermore comprises a rear wall which when the disc unit has been inserted completely comes into contact with the enclosure and thus prevents the disc unit from being inserted too far. Between the side walls 118 and 119 the supporting frame has a flat bottom plate 120 with a downwardly sloping portion 121 at its front to facilitate insertion of a disc unit.

The enclosure of the disc unit 1 has a groove 122 in each peripheral side wall, formed as part of one continuous groove which extends around the periphery of the enclosure. The pins 117 project into the grooves 122 in two opposite side walls of the enclosure of an inserted disc unit 1. When the supporting frame 113 moves to the operating position the second cover of the disc unit is moved with it by means of the pins 117.

The disc units should always by inserted into the drive unit in the manner shown in Fig. 2, i.e. with the first cover 9 facing away from the drive device 16. In order to prevent incorrect insertion of the disc unit into the drive unit, the disc unit cannot be inserted into the drive unit if the first cover 9 of the disc unit faces towards the drive device 16. The first cover 9 of the disc unit is provided with a plurality of projections 123 which extend into the groove 122 over slightly less than half the width of the groove. The pins 117 on the supporting frame are so arranged and have a diameter such that they prevent the incorrect insertion of the disc unit by cooperation with the stops 123.

The supporting frame is moved between its rest position and its operating position by means of a moving mechanism whose construction will be described in more detail hereinafter. The drive unit 2 has a substantially box-shaped housing with mutually parallel lower and upper walls 124 and 125, mutually parallel side walls 115 and 116, a rear wall 126 and a front wall which consists of the hinged flap 4 and a plate 127 formed with an opening 129. By means of hinge pins 128 the flap 4 is hingeable between an open and a closed position about an axis transverse to the side walls 115 and 116. In the closed position of the flap the housing is substantially closed and the flap covers the opening 129 in the plate 127. In the open position a disc unit can be slid onto the supporting frame 113 through the opening 129. Along the left-hand and right-hand side walls of the housing sliding members 130 and 131, which belong to the moving mechanism, are slidable between a foremost position situated nearer the front of the housing (see Fig. 8), and a rearmost position situated nearer the back of the housing (see Fig. 9). The sliding members take the form of substantially rectangular sliding plates. The sliding plate 113 is guided along the side wall 115 by four guide rollers 132 which are rotatably supported on the side wall 115 by pins 133. The sliding plate 131 is guided on the side wall 116 in a similar way, namely by means of rollers 134 on pins 135. This provides an excellent sliding guidance for the sliding plates 130 and 131, so that the sliding plates can be moved with comparatively small sliding forces. The sliding plates are movably coupled to the flap 4. The flap has a left-hand lug 136 and a right-hand lug 137. In the sliding plate 130 a slot 138 is formed, with which a pin 139 engages, which pin is rigidly connected to the lug 136. The sliding plate 131 is connected to the flap 4 in a similar way, but this is not illustrated in the drawing. By these means the pivotable movements of the flap 4 are transformed into sliding movements of the sliding plates 130 and 131. This is effected in such a way that the sliding plates are in their rearmost positions when the flap 4 is in its closed position and the sliding plates are in their foremost positions when the flap is in its fully open position.

The moving mechanism furthermore comprises a translation device which is coupled to the supporting frame 113 and which comprises left-hand and right-hand translation members 140 and 141 which are each translatable in a direction parallel or substantially parallel to the axis of rotation 15 of the drive device 16 between an upper position (see Figs. 8 and 12) nearer the upper wall 124 of the housing and a lower position (see Figs. 9 and 21) nearer the lower wall 125 of the housing. The two translation members are made of a sheet material. The translation member 140 comprises an upper flange 142, which is spot-welded to the bottom 120 of the supporting frame 113. Furthermore, there are provided limbs 143 and 144 which extend between the side wall 115 of the housing and the sliding plate 130. Near its distal end each of the limbs comprises a roller 145 or 146 which is rotatably journalled on a pin 147 and 148 respectively. The translation member 141 comprises an upper flange 149 and furthermore two limbs provided with rollers. Figs. 12 to 15 show only one limb 150, provided with a roller 151 on a pin 152. The translation members are guided in slots 153 and 154 in the deck plate 20. The sliding plate 130 has two guide slots 155 and 156, which for the most part extend obliquely and cooperate with the rollers 145 and 146 on the limbs 143 and 144 of the translation member 140. The sliding plate 131 has a similar obliquely extending guide slot for cooperation with the rollers on the translation member 141. In this way the flap 4, the sliding plates 130 and 131 and the translation members 140 and 141 are connected to the supporting frame 113 in such a way that by moving the flap from its open position to its closed position the sliding plates 130 and 131 are moved from their foremost to their rearmost position, the translation members being translated between the upper position nearer the upper wall 124 of the housing and the lower position nearer the lower wall 125 of the housing and the supporting frame 113 thus being moved between the rest position and the operating position. Ths rollers on the translation members reduce the loss of energy in the moving mechanism, so that opening and closing the flap 4 demands little effort from an operator.

The supporting frame 113 has three upright supporting portions 157 on the left-hand side and similar supporting portions 158 on the right-hand side. Said portions are integral with the bottom 120 of the supporting frame and are thus moved simultaneously with said frame by the moving mechanism. At the top a supporting plate 159 is screwed onto the supporting portions, on which plate a disc-shaped disc loader 160 is mounted. Said loader comprises a raised annular portion 161 with an annular groove 162, a portion 163 situated nearer the circumference, and a hub portion 164 in which a ball bearing 165 is mounted. Said ball-bearing is mounted on a pin 166, which extends with clearance through an opening 167 in the supporting plate 159 and at its top carries a plate 168, which prevents the pin from dropping out of the supporting plate. Around the pin 166 is arranged a helically wound compression spring 169 which at one end presses against the supporting plate 159 and at its other end against a cup 170, which is mounted on the pin 166. On the side wall 115 of the housing two blocks 171 are arranged, each formed with a recess 172 in which a compression spring 173 is mounted. The side wall 116 is equipped with blocks 174 and compression springs 175 mounted on recesses 176. The compression springs 173 and 175 bear on a top plate 177 which, when the supporting frame 113 is in the rest position (see for example Fig. 10), is supported by the supporting frame. At the front it is formed with an upwardly sloping portion 178, and together with the supporting frame 113 it constitutes an envelope for accommodating a disc unit in the rest position. In the top plate 177 a central opening 178 is formed, which corresponds to a central opening 179 of the same size in the bottom 120 of the supporting frame 113.

After a disc unit 1 has been inserted into the envelope comprising the supporting frame 113 and the top plate 177, the flap 4 is manually closed. By means of the moving mechanism already described the supporting frame 113 is then moved from its rest position to its operating position. During this movement the top plate 177, which is constantly urged towards the supporting frame 113 by the compression springs 173 and 175, is initially moved downwards together with the supporting frame. The same applies to the supporting plate 159, which is always coupled directly to the supporting frame 113 by means of the supports 157 and 158. Figs. 12 to 15 illustrate the various stages of the movement of the supporting frame from its rest position, shown in Fig. 12, to its operating position, shown in Fig. 15. Fig. 13 represents a situation in which the locating pins 55 bear against the bottom 114 of the first connecting means 39. The upper cover 9 of the disc unit and thus the top plate 177 which is supported thereby can then move no further downwards. In the meantime the locking members 46 of the connecting devices 29 have been moved to their unlocked position, so that the lower cover 10 can be further lowered with the supporting frame 113 by means of the pins 117. However, from the instant that the upper cover 9 ceases to move down with the supporting frame 113 a relative movement is obtained between the supporting plate 159 and the upper cover 9. As a result of this, the disc loader 160 will be moved through the central opening 178 of the top plate 177 upon further downward movement of the supporting frame 113. The information disc 6 initially also moves downwards with the lower cover 10 until the supporting surface 22 of the turntable 21 of the drive device 16 contacts the underside of the information disc. This situation is obtained in Fig. 14, the disc loader 160 having been lowered further and having passed through the central opening 11 of the upper cover 9. The centring element 7 of the information disc now engages with its corrugation 14 in the recess 23 of the turntable 21 and cooperates with the wall 24 of the recess. The elastic member 183 on the cover 10 is deformed as illustrated. On its upper side the centring element 7 is provided with a projecting annular stop 180, which engages with the annular groove 162 in the portion 161 of the disc loader 160. Once the situation of Fig. 14 is reached, the information disc can move no further downwards, so that as the supporting frame 113 move further only the lower cover 10 is further lowered until ultimately the operating position shown in Fig. 15 is reached. This further movement, from the position of Fig. 14, results in a movement of the supporting plate 159 relative to the information disc 6. Consequently, the annular portion 161 of the disc loader 160 comes into contact with the annular stop 180 on the centring element 7. As the supporting frame 113 is further lowered, the compression spring 169 is further compressed owing to this contact, so that a relative movement is obtained between the disc loader 160 and the supporting plate 159. Owing to the pressure of the compression spring 169 the central portion of the centring element 7 is depressed over a small distance, resulting in an elastic deformation thereof, so that the corrugation 14 is firmly pressed against the wall 24 of the recess 23 in the turntable 21. As a result of this the information disc 6 is centred and clamped relative to the turntable and thus relative to the axis of rotation 15. As a result of the depression of the central portion of the centring element 7 the portion 163 of the disc loader 160 which is situated nearer the circumference also comes into contact with the information disc, namely with the annular portion 12 of the centring element 7, so that with the aid of the compression spring 169 the information disc is clamped between the supporting surface 22 of the turntable 21 and the outer portion 163 of the disc loader 60. Further lowering of the supporting frame 113 into its operating position causes the compression spring 169 to be further compressed until the supporting plate 159 also has reached its ultimate position, see Fig. 15. In this situation the information disc 6 is centred on the turntable 21 and can now be rotated by the motor 18. The magnetic heads 25 and 26 can be inserted between the covers 9 and 10, with the aid of positioning means provided for this purpose, in order to cooperate with both sides of the information disc 6.

When the flap is opened the aforementioned operations are performed in the reverse order, after which the disc unit, which is now closed again, can be removed from the drive unit by hand. Obviously, the magnetic heads should be prevented from being located between the two covers when the flap 4 is opened. Therefore it would be effective to have the flap 4 cooperate with a switch which can control an electric circuit in such a way that a signal is supplied as soon as the flap 4 begins to be opened, so that by means of a suitable control device it is possible to ensure that the said positioning means rapidly return the heads 25 and 26 to the position of Figs. 8 and 9 before the flap is further opened.

Both the actuation of the moving mechanism *via* the flap 4 and opening and closure of the connecting devices 29 demands little effort, so that it is readily possible to actuate the moving mechanism by hand *via* the flap.

**Claims**

1. An information recording and/or reading system comprising:
A. an interchangeable disc unit (1) comprising

— a disc pack comprising at least one information disc (6),

— an enclosure (8) for the disc pack (6), comprising a first cover (9) and a second cover (10), which engage with each other and are movable relative to each other and relative to the disc pack from a closed position in which the covers together constitute a substantially closed enclosure within which the disc pack (6) is retained, at least one of the covers (9, 10) having a central opening (11, 13) for the passage of means for the rotary drive of the disc pack about an axis of rotation when the covers have been moved from the closed position into an operating position, the enclosure (8) of the disc unit (1), viewed in a direction perpendicular to the plane of the information disc, having a substantially polygonal shape, as well as

— connecting means which, at least in the closed position, interconnect the two covers (9, 10) and which comprise first connecting means attached to the first cover and second connecting means attached to the second cover, the said connecting means comprising a plurality of separate connecting devices (29) which are each disposed near a respective corner (30) of the enclosure, between that corner (30) and the circumference of the disc pack (6), and

B. a drive unit (2) comprising

— a drive device (16) which is rotatable about an axis of rotation (15) for the rotary drive of a disc pack (6), which device comprises a drive spindle (17) provided with centring means (24) and supporting means (22) for centring and supporting the disc pack (6) on the drive spindle (17),

— an information recording and/or reading apparatus for recording and/or reading information on or from a disc pack placed on the drive device, which apparatus comprises at least one recording and/or reading head (25, 26) which is radially movable relative to the axis of rotation (15) of the drive device,

— a cover-displacing device for moving the two covers of a disc unit placed on the drive unit relative to each other between the closed position and the operating position, in a direction at least substantially parallel to the axis of rotation of the drive device, which cover-displacing device comprises means for retaining the covers in the operating position during operation, as well as

— a release device comprising a release element (53) which is movable relative to the disc unit (2) and which cooperates with the connecting means from the outside of the enclosure for interrupting their connecting positions

characterized in that

— each connecting device comprises a plurality of pivotable connecting elements which are uniformly arranged on the first cover around a central axis (42) parallel to the axis of rotation (73) of the disc pack, which elements comprise a plurality of fingers (41) which extend away from the first cover (9),

— the second cover (10) is provided with an annular stop (40) for the fingers, which stop is coaxial with the said central axis (42) and has a central opening defined by a wall (45) with a diameter which decreases in the direction towards the first cover (9),

— in the connecting position the fingers (41), at least near their free ends (43), engage with the said wall (45),

— within the fingers (41) there is arranged a locking member (46) which is axially movable between a first position and a second position, which locking member in the first position cooperates with the fingers in order to lock said fingers in their connecting positions and which in the second position allows the fingers (41) to pivot to their released positions,

— there are provided resilient means (47) for loading the locking member (46) towards its first position, the fingers (41) being resiliently loaded towards their connecting positions, and that

— the release element (53) of the drive unit comprises an unlocking member (54) for axially moving the locking member (46) from its first position to its second position.

2. A system as claimed in Claim 1, characterized in that

— the resilient means comprise a helically wound compression spring (47),

— the locking member (46) is cup-shaped with a bottom (48) having a smaller diameter than the upper rim, and

— the compression spring presses on the bottom of the cup-shaped locking member (46).

3. A system as claimed in Claim 2, characterized in that

— the bottom (48) of the cup-shaped locking member (46) has a central opening (49), and

— the respective connecting device (29) is provided with a guide member (50) for the locking member, which guide member is connected to the first cover (9) and has a free end (51) which extends through the central opening (49) of the locking member (46).

4. A system as claimed in Claim 3, characterized in that

— the guide member (50) has an axial bore (52) which opens out of the free end (51), and is adapted to cooperate with the release device of the unit (2) which is provided with a locating pin (55) which fits in the axial bore (52), for locating the disc unit (1) on the drive unit (2).

5. An interchangeable disc unit (1) comprising

— a disc pack comprising at least one information disc (6),

— an enclosure (8) for the disc pack (6), comprising a first cover (9) and a second cover (10), which engage with each other and are movable relative to each other and relative to the disc pack from a closed position in which the covers together constitute a substantially closed enclosure within which the disc pack (6) is retained, at least one of the covers (9, 10) having a central opening (11, 13) for the passage of means for the rotary drive of the disc pack about an axis of rotation when the covers have been moved from the closed position into an operating position, the enclosure (8) of the disc unit (1), viewed in a direction perpendicular to the plane of the information disc, having a substantially polygonal shape, as well as

— connecting means which, at least in the closed position, interconnect the two covers (9, 10) and which comprise first connecting means attached to the first cover and second connecting means attached to the second cover, the said connecting means comprising a plurality of separate connecting devices (29) which are each disposed near a respective corner (30) of the enclosure, between that corner (30) and the circumference of the disc pack (6),

characterized in that

— each connecting device comprises a plurality of pivotable connecting elements which are uniformly arranged on the first cover around a central axis (42) parallel to the axis of rotation (73) of the disc pack, which elements comprise a plurality of fingers (41) which extend away from the first cover (9),

— the second cover (10) is provided with an annular stop (40) for the fingers, which stop is coaxial with the said central axis (42) and has a central opening defined by a wall (45) with a diameter which decreases in the direction towards the first cover (9),

— in the connecting position the fingers (41), at least near their free ends (43), engage with the said wall (45),

— within the fingers (41) there is arranged a locking member (46) which is axially movable between a first position and a second position, which locking member in the first position cooperates with the fingers in order to lock said fingers in their connecting positions and which in the second position allows the fingers (41) to pivot to their released positions,

— there are provided resilient means (47) for loading the locking member (46) towards its first position, the fingers (41) being resiliently loaded towards their connecting positions, and that

— the release element (53) of the drive unit comprises an unlocking member (54) for axially moving the locking member (46) from its first position to its second position.

6. A disc unit according to Claim 5 comprising the characterizing features of any one of claims 2—4.

**Patentansprüche**

1. Signalaufzeichnungs- und/oder -wiedergabesystem mit:
A. einer auswechselbaren Scheibeneinheit (1) mit:

— einem Scheibenpaket mit mindestens einer Informationsscheibe (6)
— einer Umhüllung (8) für das Scheibenpaket (6), mit einem ersten Deckel (9) und einem zweiten Deckel (10), die aufeinander passen und gegeneinander sowie gegenüber dem Scheibenpaket verschiebbar sind und zwar aus einer Schliesslage, in der die Deckel zusammen einen im wesentlichen geschlossene Umhüllung bilden, in der das Scheibenpaket (6) fixiert ist, wobei jedoch wenigstens einer der Deckel (9, 10) eine zentrale Öffnung (11, 13) aufweist zum Hindurchlassen von Mitteln zum drehenden Antreiben des Scheibenpaketes um eine Drehachse bei aus der Schliesslage in eine Betriebslage verschobenen Deckeln, wobei die Umhüllung (8) der Scheibeneinheit (1) gesehen in einer Richtung senkrecht zu der Ebene der Informationsscheibe eine im wesentlichen vieleckige Form aufweist, sowie
— Verbindungsmitteln, die wenigstens in der Schliesslage die zwei Deckel (9, 10) miteinander verbinden und die erste Verbindungsmittel enthalten, die an dem ersten Deckel befestigt sind und zweite Verbindungsmittel, die an dem zweiten Deckel befestigt sind, wobei die genannten Verbindungsmittel eine Anzahl einzelner Verbindungsvorrichtungen (29) enthalten, die je in der Nähe einer betreffenden Ecke (30) der Umhüllung vorgesehen sind und zwar zwischen dieser Ecke (30) und dem Umfang des Scheibenpaketes (6), und

B. einer Antriebseinheit (2) mit:

— einer um eine Drehachse (15) drehbaren Antriebsvorrichtung (16) zum drehenden Antreiben eines Scheibenpaketes (6), wobei diese Vorrichtung eine Antriebsspindel (17) mit Zentriermitteln (24) sowie Unterstützungsmitteln (22) aufweist zum Zentrieren und Unterstützen des Scheibenpaketes (6) auf der Antriebsspindel (17),
— einer Informationseinschreibe- und/oder -ausleseanordnung zum Einschrieben und/oder Auslesen von Information auf oder von einem auf die Antriebsvorrichtung gelegten Scheibenpaket und mit mindestens einem gegenüber der Drehachse (15) der Antriebsvorrichtung radial beweglichen Einschreibe- und/oder Auslesekopf (25, 26),
— einer Deckelverschiebungsvorrichtung zum wenigstens ungefähren, parallel zu der Drehachse der Antriebsvorrichtung gegeneinander Verschieben der beiden Deckel einer auf die Antriebseinheit gelegten Scheibeneinheit zwischen der Schliesslage und der Betriebslage, wobei die Deckelverschiebungsvorrichtung Mittel aufweist zum im Betrieb festhalten der Deckel in der Betriebslage, sowie
— einer Freigabevorrichtung mit einem Freigabeelement (53), das gegenüber der Scheibeneinheit (2) beweglich ist und das mit den Verbindungsmitteln von der Aussenseite der Umhüllung zusammenarbeitet zum Unterbrechen der Verbindungslagen,

dadurch gekennzeichnet, dass

— jede Verbindungsvorrichtung eine Anzahl regelmässig um eine zentrale Achse (42) parallel zu der Drehungsachse (73) des Scheibenpaketes gegliederter schwenkbarer Verbindungselemente aufweist, die aus einer Anzahl sich von dem ersten Deckel (9) erstreckender Finger (41) bestehen,
— der zweite Deckel (10) mit einem zu der genannten zentralen Achse (42) koaxialen ringförmigen Anschlag (40) für die Finger versehen ist, wobei dieser Anschlag eine zentrale Öffnung aufweist, die durch eine Wand (45) mit einem in der Richtung des ersten Deckels (9) abnehmenden Durchmesser definiert ist und
— in der Verbindungslage die Finger (41) wenigstens in der Nähe der freien Enden (43) mit der genannten Wand (45) zusammenarbeiten,
— zwischen den Fingern (41) ein Sperrelement (46) vorgesehen ist, das zwischen einer ersten Lage und einer zweiten Lage axial beweglich ist, wobei dieses Sperrelement in der ersten Lage mit den Fingern zusammenarbeitet um die genannten Finger in ihren Verbindungslagen zu verriegeln und dass in der zweiten Lage den Fingern (41) ermöglicht in ihre Freigabelage zu schwenken,
— Federmittel (47) vorgesehen sind, zum Belasten des Sperrelementes (46) in Richtung der ersten Lage wobei die Finger (41) in Richtung der Verbindungslagen federnd belastet werden und dass
— das Freigabeelement (53) der Antriebseinheit ein Entriegelungselement (54) aufweist zur axialen Bewegung des Sperrelementes (46) aus der ersten in die zweite Lage.

2. System nach Anspruch 1, dadurch gekennzeichnet, dass

— die Federmittel eine schraubenlinienförmig gewickelte Druckfeder (47) umfassen,
— das Sperrelement, (46) schalenförmig ist mit einem Boden (48), der einen kleineren Durchmesser hat als der obere Rand, und

— dass die Druckfeder auf den Boden des schalenförmigen Sperrelementes (46) drückt.

3. System nach Anspruch 2, dadurch gekennzeichnet, dass

— der Boden (48) des schalenförmigen Sperrelementes (46) eine zentrale Öffnung (49) aufweist und
— die betreffende Verbindungsvorrichtung (29) mit einem mit dem ersten Deckel (19) verbundenen und mit einem freien Ende (51) durch die zentrale Öffnung (49) des Sperrelementes (46) ragenden Führungselement (50) für das Sperrelement (46) versehen ist.

4. System nach Anspruch 3, dadurch gekennzeichnet, dass

— das Führungselement (50) eine in das freie Ende (51) mündende axiale Bohrung (52) aufweist und dazu angepasst ist, mit der Freigabevorrichtung der Einheit (2) zusammenzuarbeiten, die mit einem in die axiale Bohrung (52) passende Richtstift (55) zum Richten der Scheibeneinheit (1) auf die Antriebseinheit (2) versehen ist.

5. Eine auswechselbare Scheibeneinheit (1) mit:

— einem Scheibenpaket mit mindestens einer Informationsscheibe (6)
— einer Umhüllung (8) für das Scheibenpaket (6) mit einem ersten Deckel (9) und einem zweiten Deckel (10), die aufeinanderpassen und gegeneinander und gegenüber dem Scheibenpaket verschiebbar sind und zwar aus einer Schliesslage, in der die Deckel zusammen eine im wesentlichen geschlossene Umhüllung bilden, in der das Scheibenpaket (6) fixiert ist, wobei jedoch wenigstens einer der Deckel (9, 10) eine zentrale Öffnung (11, 13) aufweist zum Hindurchlassen von Mitteln zum drehenden Antreiben des Scheibenpaketes um eine Drehungsachse bei aus der Schliesslage, in eine Betriebslage verschobenen Deckeln, wobei die Umhüllung (8) der Scheibeneinheit (1), gesehen in einer Richtung senkrecht zu der Ebene der Informationsscheibe, eine im wesentlichen vieleckige Form aufweist, sowie
— Verbindungsmitteln, die wenigstens in der geschlossenen Lage mit den zwei Deckeln (9, 10) verbunden sind und erste Verbindungsmittel enthalten, die an dem ersten Deckel angeordnet sind sowie zweite Verbindungsmittel, die an dem zweiten Deckel angeordnet sind, wobei die genannten Verbindungsmittel eine Anzahl einzelner Verbindungsvorrichtungen (29) aufweisen, die in der Nähe einer betreffenden Ecke (30) der Umhüllung vorgesehen sind und zwar zwischen dieser Ecke (30) und dem Umfang des Scheibenpaketes (6), dadurch gekennzeichnet, dass
— jede Verbindungsvorrichtung eine Anzahl schwenkbarer Verbindungselemente aufweist, die einheitlich auf dem ersten Deckel um eine zentrale Achse (42) parallel zu der Drehungsachse (73) des Scheibenpaketes angeordnet sind, wobei diese Elemente eine Anzahl Finger (41) aufweisen, die sich von den ersten Deckel (9) erstrecken,
— der zweite Deckel (10) mit einem zu der genannten zentralen Achse (42) koaxialen ringförmigen Anschlag (40) für die Finger versehen ist, wobei dieser Anschlag eine zentrale Öffnung aufweist, die durch eine Wand (45) mit einem in Richtung des ersten Deckels (9) abnehmenden Durchmesser definiert ist,
— in der Verbindungslage die Finger (41) wenigstens in der Nähe ihrer freien Enden (43) mit der genannten Wand (45) zusammenarbeiten,
— zwischen den Fingern (41) ein Sperrelement (46) vorgesehen ist, das zwischen einer ersten Lage und einer zweiten Lage axial beweglich ist, wobei dieses Sperrelement in der ersten Lage mit den Fingern zusammenarbeitet um die genannten Finger in der Verbindungslage zu verriegeln und die es in der zweiten Lage den Fingern (41) ermöglichen, in die Freigabelage zu schwenken,
— Federmittel (47) zum Belasten des Sperrelementes (46) in Richtung der ersten Lage vorgesehen sind, wobei die Finger (41) in Richtung der Verbindungslage federnd belastet sind und dass
— das Freigabeelement (53) der Antriebseinheit ein Entsperrelement (54) zur axialen Bewegung des Sperrelementes (46) aus der ersten Lage in die zweite Lage aufweist.

6. Eine Scheibeneinheit nach Anspruch 5, mit den kennzeichnenden Merkmalen eines der Ansprüche 2 bis 4.

**Revendications**

1. Système d'enregistrement et/ou de reproduction d'information comportant:
   A. un magasin interchangeable de disque(s) (1) comprenant

— un paquet de disques d'information ou à tout le moins un disque d'information (6),
— une enveloppe (8) pour ce disque ou paquet de disques (6), formée par des premier et deuxième couvercles (9, 10) qui s'adaptent l'un à l'autre et sont déplaçables l'un par rapport à l'autre ainsi que par rapport au disque ou paquet de disques depuis une position de fermeture dans laquelle les deux couvercles constituent ensemble une enveloppe pratiquement fermée à l'intérieur de laquelle le disque ou paquet de disques (6) est encastré, alors qu'au moins un des couvercles (9, 10) comporte une ouverture centrale (11, 13) pour le passage de moyens servant à imposer un mouvement de rotation au disque ou paquet de disques autour d'un axe de rotation lorsque, depuis ladite position de fermeture, les couvercles ont été amenés dans une position de fonctionnement, tandis que vue dans une direction perpendiculaire au plan du (des) disque(s) d'information, l'enveloppe (8) renfermant le magasin de disque(s) (1), affecte une forme pratiquement polygonale, ainsi que

— des moyens de liaison qui, du moins dans la position de fermeture, relient les deux couvercles (9, 10) et qui comportent des premiers moyens de liaison attachés au premier couvercle et des deuxièmes moyens de liaison attachés au second couvercle, lesdits moyens de liaison comprenant plusieurs dispositifs de liaison distincts (29) dont chacun est situé près d'un coin (30) de l'enveloppe et notamment entre ce coin (30) et la circonférence du disque ou paquet de disques (6), et ·

B. un dispositif d'entraînement (16) pouvant tourner autour d'un axe de rotation (15) pour imposer un mouvement de rotation, disque ou paquet de disques (6), ce dispositif d'entraînement comprenant un arbre d'entraînement (17) muni de moyens de centrage (24) et de moyen de support (22) pour centrer et supporter le disque ou paquet de disques (6) sur ledit arbre d'entraînement (17),

— un appareil d'enregistrement et/ou de reproduction d'information pour l'enregistrement et/ou la reproduction d'information sur un disque ou paquet de disques (6) placé sur le dispositif d'entraînement, ledit appareil comprenant au moins une tête d'enregistrement et/ou de reproduction (25, 26) pouvant être déplacée radialement par rapport à l'axe de rotation (15) du dispositif d'entraînement,

— un dispositif de déplacement de couvercles pour déplacer les deux couvercles d'un magasin de disque(s), placé sur l'unité d'entraînement, l'un par rapport à l'autre entre la position de fermeture et la position de fonctionnement dans une direction au moins pratiquement parallèle à l'axe de rotation du dispositif d'entraînement, de dispositif de déplacement de couvercles comprenant des moyens pour maintenir les couvercles dans la position de fonctionnement durant le fonctionnement, ainsi qu'

— un dispositif de relâchement comprenant un élément de relâchement (53) qui est mobile par rapport au magasin de disque(s) (1) et coopère avec les moyens de liaison depuis l'extérieur de l'enveloppe pour défaire les liaisons établies par ces moyens de liaison,

caractérisé en ce que

— chaque dispositif de liaison comprend plusieurs éléments de liaison pivotables qui sont élaborés équidistamment sur le premier couvercle autour d'un axe central (42) qui est parallèle à l'axe de rotation (73) du disque ou paquet de disque(s), les éléments en question comportant plusieurs doigts (41) qui s'étendent dans la direction s'éloignant du premier couvercle (9),

— le second couvercle (10) est muni d'un arrêt annulaire (40) pour les doigts, ledit arrêt étant coaxial audit axe central (42) et comportant une ouverture centrale définie par une paroi (45) dont le diamètre décroît à mesure d'approcher, le premier couvercle (9),

— dans la position de liaison, les doigts (41) entrent en contact avec ladite paroi (45) au moins près de leurs extrémités libres (45),

— un organe de verrouillage (46) est élaboré entre les doigts (41) et est axialement déplaçable entre une première position et une seconde position, ledit organe de verrouillage (46) coopèrent, dans sa première position, avec les doigts (41) pour les verrouiller dans leurs positions de liaison, alors que dans sa seconde position, ledit organe (46) permet aux doigts (41) de pivoter vers leurs positions de relâchement,

— le système est muni de moyens élastiques (47) pour imposer à l'organe de verrouillage (46) une charge vers sa première position, les doigts (41) subissant une charge élastique vers leurs positions de liaison, et

— l'élément de relâchement (53) de l'unité d'entraînement comprend un organe de déverrouillage (54) pour mouvoir axialement l'organe de verrouillage (46) depuis sa première position vers sa seconde position.

2. Système d'enregistrement et/ou de reproduction d'information selon la revendication 1, caractérisé en ce que

— les moyens élastiques comprennent un ressort de pression hélicoïdal (47),

— l'organe de verrouillage (46) est en forme de cuvette avec un fond (48) dont le diamètre est plus petit que celui du bord supérieur de la cuvette, et

— le ressort de pression exerce son action sur le fond de l'élément de verrouillage en forme de cuvette (46).

3. Système d'enregistrement et/ou de reproduction d'information selon la revendication 2, caractérisé en ce que

— le fond (48) de l'organe de verrouillage en forme de cuvette (46) comporte une ouverture centrale (49), et

— le dispositif de liaison afférant (29) est muni d'un organe de guidage (50) pour l'organe de verrouillage, ledit organe de guidage étant lié au premier couvercles (9) et ayant une extrémité libre (51) qui passe par l'ouverture centrale (49) de l'organe de verrouillage (46).

4. Système d'enregistrement et/ou de reproduction d'information selon la revendication 3, caractérisé en ce que

— l'organe de guidage (50) comporte un alésage central (52) qui débouche en dehors de l'extrémité libre (51), et est adapté à coopérer avec

— le dispositif de relâchement de l'unité d'entraînement (2) qui est muni d'une broche de positionnement (55) s'ajustant dans l'alésage axial (52) pour positionner le magasin de disque(s) (1) sur l'unité d'entraînement (2).

5. Magasin interchangeable de disque(s) (1) comprenant

— un paquet de disques d'information ou à tout le moins un disque d'information (6),
— une enveloppe (8) pour ce disque ou paquet de disques (6), formée par des premier et deuxième couvercles (9, 10) qui s'adaptent l'un à l'autre et sont déplaçables l'un par rapport à l'autre ainsi que par rapport au disque ou paquet de disques depuis une position de fermeture dans laquelle les deux couvercles constituent ensemble une enveloppe pratiquement fermée à l'intérieur de laquelle le disque ou paquet de disques (6) est encastré, alors qu'au moins un des couvercles (9, 10) comporte une ouverture centrale (11, 13) pour le passage de moyens servant à imposer un mouvement de rotation au disque ou paquet de disques autour d'un axe de rotation lorsque depuis ladite position de fermeture, les couvercles ont été amenés dans une position de fonctionnement, tandis que vue dans une direction perpendiculaire au plan du (des) disque(s) d'information, l'enveloppe (8) renfermant le magasin de disque(s) (1), affecte une forme pratiquement polygonale, ainsi que
— des moyens de liaison qui, du moins dans la position de fermeture, relient les deux couvercles (9, 10) et qui comportent des premiers moyens de liaison attachés au premier couvercle et des deuxièmes moyens de liaison attachés au second couvercle, lesdits moyens de liaison comprenant plusieurs dispositifs de liaison distincts (29) dont chacun est situé près d'un coin (30) de l'enveloppe et notamment entre ce coin (30) et la circonférence du disque ou paquet de disques (6),

caractérisé en ce que

— chaque dispositif de liaison comprend plusieurs éléments de liaison pivotables qui sont élaborés équidistamment sur le premier couvercle autour d'un axe central (42) qui est parallèle à l'axe de rotation (73) du disque ou paquet de disques (6), les éléments en question comportant plusieurs doigts (41) qui s'étendent dans la direction s'éloignant du premier couvercle (9),
— le second couvercle (10) est muni d'un arrêt annulaire (40) pour les doigts, ledit arrêt étant coaxial audit axe central (42) et comportant une ouverture centrale définie par une paroi (45) dont le diamètre décroît à mesure d'approcher le premier couvercle (9),
— dans la position de liaison, les doigts (41) entrent en contact avec ladite paroi (45) au moins près de leurs extrémités libres (43),
— un organe de verrouillage (46) est élaboré entre les doigts (41) et est axialement déplaçable entre une première position et une seconde position, ledit organe de verrouillage (46) coopérant, dans sa première position, avec les doigts (41) pour les verrouiller dans leurs positions de liaison, alors que dans sa seconde position, ledit organe (46) permet aux doigts (41) de pivoter vers leurs positions de relâchement,
— le système est muni de moyens élastiques (47) pour imposer à l'organe de verrouillage (46) une charge vers sa première position, les doigts (41) subissant une charge élastique vers leurs positions de liaison, et
— l'élément de relâchement (53) de l'unité d'entraînement comprend un organe de déverrouillage (54) pour mouvoir axialement l'organe de verrouillage (46) depuis sa première position vers sa seconde position.

6. Magasin de disque(s) selon la revendication 5 comprenant les caractéristiques de l'une des revendications 2—4.

0 032 771

FIG.1

FIG. 2

FIG.3

FIG.4

FIG.5

FIG.6

FIG.7

3

FIG. 8

4

FIG. 9

FIG.10

FIG.11

FIG.12

FIG.13

FIG.14

FIG.15

0 032 771